(19) **Europäisches Patentamt**

**European Patent Office**

**Office européen des brevets**

(11) **EP 1 295 159 B1**

(12) **EUROPÄISCHE PATENTSCHRIFT**

(45) Veröffentlichungstag und Bekanntmachung des Hinweises auf die Patenterteilung:
**01.03.2006 Patentblatt 2006/09**

(51) Int Cl.:
***G02B 21/00*** *(2006.01)*     ***G02B 21/16*** *(2006.01)*

(21) Anmeldenummer: **01962762.9**

(22) Anmeldetag: **22.06.2001**

(86) Internationale Anmeldenummer:
**PCT/EP2001/007104**

(87) Internationale Veröffentlichungsnummer:
**WO 2002/001272 (03.01.2002 Gazette 2002/01)**

(54) **FLUORESZENZMIKROSKOP**

FLUORESCENCE MICROSCOPE

MICROSCOPE A FLUORESCENCE

(84) Benannte Vertragsstaaten:
**AT BE CH CY DE DK ES FI FR GB GR IE IT LI LU MC NL PT SE TR**

(30) Priorität: **26.06.2000 DE 10030929**

(43) Veröffentlichungstag der Anmeldung:
**26.03.2003 Patentblatt 2003/13**

(73) Patentinhaber: **CARL ZEISS JENA GmbH**
**07745 Jena (DE)**

(72) Erfinder:
• **MITZKUS, REINER**
**37085 Göttingen (DE)**
• **SOELL, Alex**
**37136 Waake (DE)**

(56) Entgegenhaltungen:
**US-A- 5 880 473**

**Beschreibung**

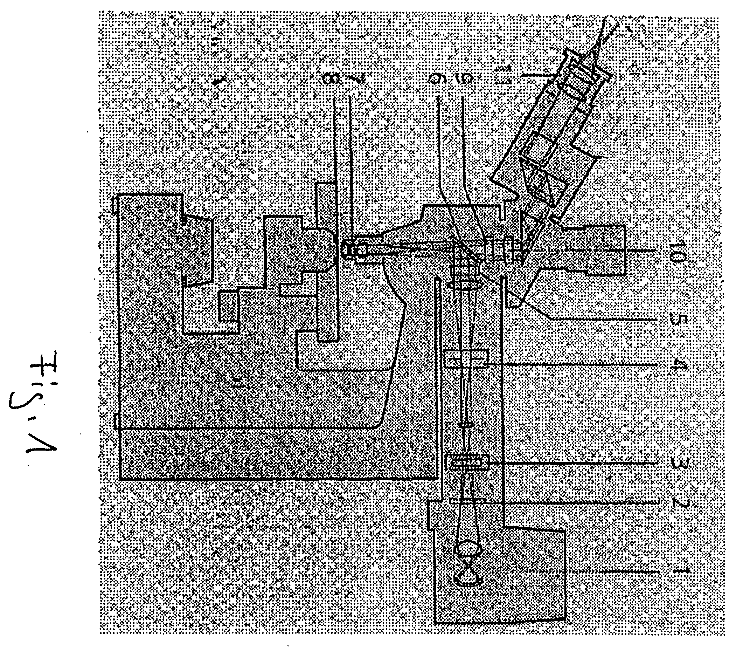

Die Abbildung Fig.1 zeigt den Strahlengang in einem Mikroskop mit Fluoreszenzausrüstung.

Von einer zusätzlichen Lichtquelle (1) gelangt das Licht über ein Wärmeschutzfilter (2), Rotdämpfungsfilter / Absperrschieber (3) und eine Leuchtfeldblende (4) zum Anregungsfilter (5).

Dieses ist im Reflektorschieber des Mikroskopes eingebaut, der auch einen dichroitischen Strahlteiler (6) enthält.

Der dichroitische Strahlteiler reflektiert das kurzwellige Anregungslicht über das Objektiv (7) in das Präparat (8).

Die entstehende Emission wird vom Objektiv (7) eingesammelt und -weil sie größere Wellenlängen als das Anregungslicht aufweist - vom dichroitischen Strahlteiler (6) durchgelassen. Nun passieren die Strahlen noch das Emissionsfilter (9).

Dort wird der Rest des Anregungslichts ausgefiltert.

Daher wird dieses Filter auch als Sperrfilter bezeichnet. Tubuslinse (10) und Okular (11) formen wie gewohnt das mikroskopische Bild, das jetzt noch aus Fluoreszenzlicht besteht.

Mehrfachbelichtungen bei Fluoreszenzaufnahmen mit verschiedenen Emissionsfiltersätzen (A, B) erfordern, um einen Bildversatz (Pixelshift) zu vermeiden, eine optimale Deckungsgleichheit des Objektbildes bei den einzelnen Aufnahmen. Hier sind jedoch technologische Grenzen gesetzt.

Die für die Fluoreszenzanwendung notwendigen Filterkombinationen verursachen, bedingt durch den unterschiedlichen Keilwinkel der Emissionsfilter ($A_{EM}$, $B_{EM}$) und den der Farbteiler, einen geringfügigen Bildversatz.

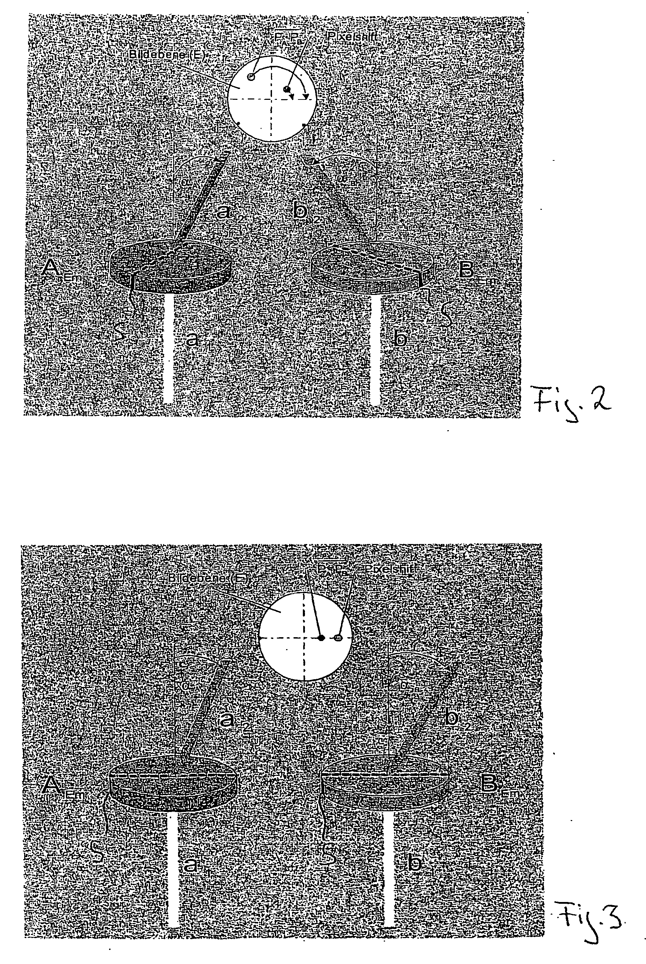

Dies ist in Fig.2 dargestellt.

Die Bezugszeichen bedeuten:

$A_{Em}$       Emissionsfilter des Filtersatzes A

$B_{Em}$       Emissionsfilter des Filtersatzes B

$a_1$       Lichtstrahl, der auf $A_{Em}$ auftrifft

$b_1$       Lichtstrahl, der auf $B_{Em}$ auftrifft

$a_2$       durch $A_{Em}$ abgelenkter Lichtstrahl

$b_2$       durch $B_{Em}$ abgelenkter Lichtstrahl

$\alpha_A$       Winkel zwischen dem einfallenden Lichtsrahl $a_1$ und dem abgelenkten Lichtstrahl $a_c$ des Filters $A_{EM}$

$\alpha_B$       Winkel zwischen dem einfallenden Lichtsrahl $b_1$ und dem abgelenkten Lichtstrahl $b_2$ des Filters $B_{EM}$

E       Bildebene

$\overline{P_A P_B}$       Entfernung (Pixelshift) zwischen den auf der Bild ebene E auftreffenden Bildpunkten

Die Lichtstrahlen $a_1$ bzw. $b_1$ treffen auf die Emissionsfilter $A_{Em}$ und $B_{Em}$ der entsprechenden Filtersätze A und B. Der Strahl wird aufgrund des vorhandenen Keilwinkels der Filter, je nach Einbaulage in mehr oder weniger entgegengesetzte Richtungen abgelenkt ($a_2$ und $b_2$ - zur Verdeutlichung des Vorganges hier stark übertrieben dargestellt).

Die auf der Bildebene E auftreffenden Bildpunkte liegen daher nicht genau übereinander sondern sind um die Pixelshift zueinander versetzt.

Auch bei den engen Toleranzgrenzen der Filtersätze von Cart Zeiss mit einem geringenh Bildversatz tritt dieser Versatz noch geringfügig auf.

Erfindungsgemäß werden nunmehr, wie in Fig. 3 dargestellt, die Filter bezüglich ihres Keilwinkels zueinander ausgerichtet.

Die Filter werden vorher vom Mikroskophersteller , beispielsweise in einem Autokollimator, bezüglich ihres Keilwinkels und seiner Orientierung ausgemessen und markiert, beispielsweise mittels eines Striches S an der Seite, der beispielsweise an der Seite angebracht werden kann, die der Auslenkrichtung durch die Keilswirkung gegenüber liegt. Beim Einlegen der Filter in das jeweilige Filtermodul des Mikroskopes befindet sich an diesem ebenfalls eine Markierung, die mit der Markierung des Filters in Überdeckung gebracht wird.

Hierdurch ist die gleiche Orientierung der Filter gewährleistet.

Nach dem Eindrehen der Emissionsfilter $A_{Em}$ und $B_{Em}$

(s. Abb. 1) werden die auftreffenden Lichtstrahlen $a_1$ und $b_1$ in die gleiche Richtung abgelenkt ($a_2$ und $b_2$). Auf diese Weise wird die ohnehin schon geringfügige Pixelshift minimiert, bzw. im Idealfall kompensiert (Pixelshift $\overline{P_A P_B}$').

Hierbei kann herstellerseitig auch eine Bestimmung der Keilwinkel erfolgen und Filter mit gleichen Keilwinkein markiert und vom Anwender zugeordnet werden.

**Patentansprüche**

1. Fluoreszenzmikroskop mit Sperrfiltern für einen Teil des von einer Probe emittierten Lichtes, die Markierungen bezüglich der Orientierung ihres Keilwinkels aufweisen.

2. Fluoreszenzmikroskop nach Anspruch 1, wobei am Filterhalter des Mikroskopes eine Markierung vorgesehen ist, zu der die Markierung der Filter definiert orientiert werden kann.

3. Fluoreszenzmikroskop nach Anspruch 1 und/oder 2, wobei die Filter bezüglich Ihres Keilwinkels markiert sind

**Claims**

1. Fluorescence microscope having blocking filters for part of the light emitted by a sample, which filters comprise markings with respect to the orientation of their wedge angle.

2. Fluorescence microscope as claimed in Claim 1, wherein a marking is provided on the filter holder of the microscope, the marking on the filter being able to be orientated in a defined manner with respect to this filter holder marking.

3. Fluorescence microscope as claimed in Claim 1 and/or 2, wherein the filters are marked with respect to their wedge angle.

**Revendications**

1. Microscope à fluorescence avec des filtres d'arrêt pour une partie de la lumière émise par un échantillon, qui présentent des marques concernant l'orientation de leur angle de coin.

2. Microscope à fluorescence selon la revendication 1, où est prévu au support de filtre du microscope une marque relativement à laquelle les marques des filtres peuvent être orientées d'une manière définie.

3. Microscope à fluorescence selon la revendication 1 et/au 2, où les filtres gant marqués en ce qui concerne leur angle de coin.

Fig. 1

Fig. 2

Fig. 3